# EUROPEAN PATENT APPLICATION

(11) **EP 1 176 765 A1**
(43) Date of publication of application: **30.01.2002**
(21) Application number: 00306300.5
(22) Date of filing: 24.07.2000
(51) Int. Cl.: H04L 12/56, H04Q 11/00

(54) **Method and system for providing end-to-end protection in point-to-multipoint access networks**

(71) Applicant: LUCENT TECHNOLOGIES INC., Murray Hill, New Jersey 07974-0636 (US)
(72) Inventor: Muys, Wouteru, 3752 NP Bunschoten (NL); Steltenpool, Henk J., 3752 JA Bunschoten (NL); Wiebenga, Edward, 1326 PJ Almere (NL)
(74) Representative: Buckley, Christopher Simon Thirsk

(57) **Abstract**

Method for providing end-to-end protection in a point-to-multipoint access network (1) and point-to-multipoint access network (1), the access network (1) providing at least one physical connection between a line termination unit (10) and a plurality of network units (21, 23, 27), each network unit (21, 23, 27) being connectable to end user equipment (25, 29), the at least one physical connection comprising at least one distribution network (15, 16) connecting the line termination unit to the plurality of network units (21, 23, 27). Protection switching between one of the at least one physical connection and a further one of the at least one physical connection is provided by a protection mechanism comprised in at least one of the plurality of network units (21, 23, 27).

## Description

The present invention relates to a method and a system for providing end-to-end protection in point-to-multipoint access networks, such as passive optical networks. More specifically, the present invention relates to a method for providing end-to-end protection in a point-to-multipoint access network, the access network providing at least one physical connection between a line termination unit and a plurality of network units, each network unit being connectable to end user equipment, the at least one physical connection comprising at least one distribution network connecting the line termination unit to the plurality of network units. In a further aspect, the present invention relates to a point-to-multipoint access network comprising a line termination unit having a first subscriber unit and a second subscriber unit, the first subscriber unit being connected to a first distribution network and the second subscriber unit being connected to a second distribution network, at least one customer facility comprising at least one network unit, the at least one network unit being connected to either the first distribution network or the second distribution network and being arranged to interface either the first distribution network or the second distribution network with end user equipment.

It is known to provide end-to-end protection in optical point-to-multipoint access networks, such as ATM-PON (Asynchronous Transfer Mode - Passive Optical Network), providing (duplex) optical communication between a network node interface and multiple user network interfaces. An optical line termination (OLT) provides the optical transmitter and receiver on the network node interface side of an optical distribution network (ODN). On the user network interface side of the ODN, a number of optical network units (ONU) comprise at least one optical network unit (ONU) providing the optical transmitter and receiver interface with the ODN. The ODN comprises fibre cable and passive optical splitters. One fibre connected to the OLT is passively split and connected to multiple ONU's. The ATM-PON is standardised in ITU-T Recommendation G.983.1 "Broadband optical access systems based on passive optical networks (PON)".

To provide end-to-end protection in ATM-PON systems and enhance reliability of the ATM-PON system, a number of architectures have been proposed in ITU-T Recommendation G.983.1, comprising one or more redundant parts of the ATM-PON system. For reliability, networks may use diverse routes to each terminal to protect against cable cuts, and duplicated transmission interfaces to protect against transmission interface failures. Two types of protection switching exist: automatic switching and forced switching. Automatic switching is forced by fault detection, such as loss of signal, loss of frame, signal degradation (the bit error rate falls below a predetermined threshold), etc. Forced switching occurs in case of administrative events, such as fibre re-routing, fibre replacement, etc. These types of switching are generally realised by the operations, administration and maintenance (OAM) function of the ATM-PON system and are implemented in physical layer OAM (PL-OAM) cells transmitted downstream the ODN (from OLT to all ONU's). Several types of physical architecture are being proposed to provide end-to-end protection, of which the simplest only doubles the optical fibres of the ODN between the OLT and the optical splitter, and thus only provides for protection of the optical fibre between OLT and optical splitter by forced switching.

A second alternative doubles the OLT receiver/transmitter and the optical fiber between the OLT and the optical splitter, and the optical splitter now has two ports on the OLT side. In this alternative also only the part between optical splitter and OLT is protected. This configuration requires cold (inoperable) stand-by of the spare optical circuit on the OLT side. Switching can be forced or automatic.

A third alternative additionally doubles the components on the ONU side of the ATM-PON system. This renders protection for failure at any point by switching to the stand-by components. This alternative enables hot stand-by of the spare components on both ONU and OLT side, and also enables switching without cell loss. However, when a failure is detected, the system performs a protection switching from the total working network to a complete other protection network, independent of the localisation of a failure. Therefore, it is impossible to service both protected and unprotected customers with an ATM-PON system according to this third alternative arrangement.

In a fourth, more complex, alternative, it is possible to selectively duplicate the components on the ONU side. Some ONU's may have a protected connection and some only an unprotected connection. To enable this, the optical splitter on the ONU side must be duplicated and have two input/output ports on the OLT side, as in the second alternative. Also two additional optical splitters are required between the duplicated optical splitters and the duplicated OLT, to provide redundancy on both sides of the duplicated optical splitters. Again, switching can be automatic or forced.

In all four alternatives suggested in Appendix D of ITU-T Recommendation G.983.1 the ATM-PON system should implement the switching mechanism. This requires a complex circuitry (hardware and/or software) in both the OLT's and ONU's to detect failures and to take corrective action. The alternatives as presented in Appendix D of ITU-T Recommendation G.983.1 either do not provide sufficient protection (only part of the end-to-end path between OLT and ONU) or provide full protection at a high cost. Furthermore, it is difficult to mix unprotected ONU's and protected ONU's in the first three alternatives, the fourth alternative only providing this possibility at the expense of additional optical splitters.

The present invention seeks to provide end-to-end protection in point-to-multipoint access networks in a simple and cost-effective manner, and to provide a possibility to have both protected and unprotected customers on the same network.

This is achieved by a method according to the preamble defined above, in which protection switching between one of the at least one physical connection and a further one of the at least one physical connection is provided by an protection mechanism comprised in at least one of the plurality of network units. Preferably, the network units comprise a user network interface for interfacing the network unit with the end user equipment. Even more preferably, the protection mechanism is provided in the user network interface.

The access network may, e.g., be a passive optical network providing data communication using an asynchronous transfer mode (ATM) transport layer protocol for providing Ethernet connectivity.

The present method provides a simple and cost-effective solution for providing end-to-end protection in point-to-multipoint access networks, as no additional adaptation of the ATM-PON system is necessary.

Also, the present invention allows mixing both protected and unprotected customers on an ATM-PON system. When a customer wants to switch from an unprotected connection to a protected connection, it suffices to install additional hardware at the customer (additional ONU and, possibly, additional fiber routing from the optical splitter to the customer).

A further advantage of the present invention is that, when a failure occurs in the path between optical splitter and end user equipment, this only affects that specific customer. The connection of the other customers with the same optical splitter and the OLT will stay operative, as opposed to the third alternative presented in ITU-T Recommendation G.983.1, in which all customers will be switched to the alternative, redundant path.

The protection mechanism in the network unit, or more preferably, the user network interface, is preferably provided in the Ethernet layer, and may comprise a spanning tree algorithm. Usually, this spanning tree algorithm is already implemented in the network unit or user network interface and may form part of the Ethernet connection protocol.

In a further embodiment, two separate physical paths are provided between the line termination unit and the end user equipment, and the protection mechanism further provides load sharing over the two separate physical paths. This allows a more efficient use of the bandwidth of the access network, while still providing end-to-end protection.

In a further aspect, the present invention relates to a point-to-multipoint access network according to the preamble defined above, in which the at least one network unit comprises a protection mechanism for providing a protection switching function between a first end-to-end connection between the line termination unit and the end user equipment via the first distribution network and a second end-to-end connection between the line termination unit and the end user equipment via the second distribution network.

Preferably, the at least one of the plurality of network units comprises a user network interface for interfacing the network unit with the end user equipment. Even more preferably, the protection mechanism is provided in the user network interface.

Preferably, the first and second distribution network comprises a passive optical network, which may be operated using an asynchronous transfer mode (ATM) protocol. In a further embodiment, the access network provides a connection according to an Ethernet protocol. Preferably, the protection mechanism is provided in the Ethernet layer and may, in a preferred embodiment comprise a spanning tree algorithm. In a further embodiment, two separate physical paths are provided between the line termination unit and the end user equipment, and the protection mechanism further provides load sharing over the two separate physical paths. The access network according to the present invention provides comparable advantages as the method according to the present invention.

The present invention will now be discussed in more detail using a preferred embodiment as an example, with reference to the accompanying drawing, in which the figure shows a diagrammatic view of a point-to-multipoint access network.

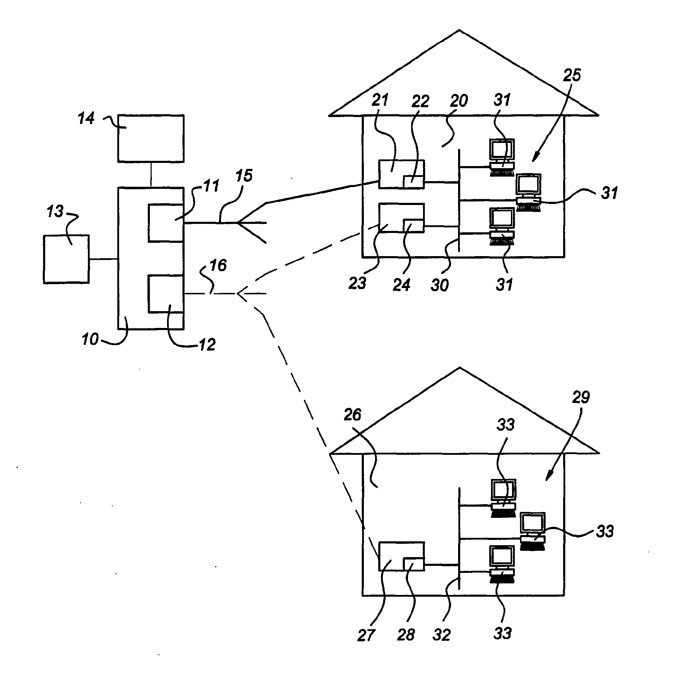

The figure shows a diagrammatic view of a point-to-multipoint access network 1 providing a physical communication path between a router 13 at a central location and multiple end user equipment 25, 29 at a customer location remote from the central location. The end user equipment 25, 29 is shown in Fig. 1 as a local area network (LAN) 30, 32, onto which three computers 31, 33 are connected. However, the end user equipment 25, 29 may comprise a single PC or a LAN 30, 32 interconnecting any number of computers and other equipment. The router 13 forms a network node interface of the access network 1 and the end user equipment 25, 29 form the usernetwork interface of the access network 1. In this embodiment, the point-to-multipoint network is an asynchronous transfer mode passive optical network (ATM-PON or APON), able to transport various services between the user network interface and the network node interface. On the single point side of the point-to-multipoint access network 1 the router 13 provides further connection with other routers or host computers (not shown). The router 13 is connected to an optical line termination (OLT) 10, in which in this embodiment two optical subscriber units (OSU) 11, 12 are present. The OSU's 11, 12 provide the conversion from electrical signals into optical signals and vice versa. Each OSU 11, 12 is connected to a first, respectively a second optical distribution network (ODN) 15, 16. An element management system (EMS) 14 is connected to the OLT 10 for control of the OLT 10 and its associated OSU's 11, 12. The EMS 14 provides the operations, administration and maintenance functions for the APON system.

Each ODN 15, 16 comprises an optical fiber connected to the first and second OSU 11, 12, respectively, and an optical splitter connected to multiple fibers for connection with multiple customer systems 20, 26 of the point-to-multipoint access network 1. Preferably, the first and second ODN 15, 16 are routed via different physical paths to decrease the chance of simultaneous failure of both ODN's 15, 16, e.g. caused by breaking ofthe fibers near the OSU's 11, 12.

At the multipoint side of the point-to-multipoint access network 1, the customer systems 20, 26 are connected to one or both the first and second ODN 15, 16. In the embodiment shown, a first customer system 20 comprises a first and second optical network unit (ONU) 21, 23 which convert the optical signal from the first and second ODN 15, 16, respectively, into an electrical signal and vice versa. A first user network interface 22 converts the electrical signal from the first ONU 21 into data for first end user equipment 25, and vice versa. The first end user equipment 25 is also connected to the second ONU 23 via a second user network interface 24. The first and second user network interface 22, 24 may be implemented as line cards which are physically located in the first and second ONU 21, 23, respectively.

A second customer system 26 comprises only a third ONU 27, which is connected to the second ODN 16. A third user network interface 28 interfaces the third ONU 27 with a second end user equipment 29. The third user network interface 28 may also be implemented as a line card located in the third ONU 27.

In the following, the first customer system 20 will be named protected customer and the second customer system 26 will be named unprotected customer. A plurality of protected and unprotected customers 20, 26 may be connected to the APON system according to the present invention, the protected customers 20 being connected to both the first and second ODN's 15, 16, and the unprotected customers being connected to one of the first and second ODN 15, 16.

Typically, the primary service offered over the APON system shown is Ethernet communication. In that case, the first and second end user equipment 25, 29 may be a PC or a local area network 30, 32 interconnecting a number of computers or other peripherals 31, 33. According to the present invention, the end-to-end protection is provided by a mechanism in the Ethernet layer. The Ethernet layer is a layer which is positioned higher than the physical layer in the OSI model. The mechanism may e.g. be implemented in the Ethernet protocol.

The protected customer 20 is connected to both the first and second ODN 15, 16. In the preferred embodiment, the so-called spanning tree algorithm provides the protection mechanism. This algorithm may be implemented in the first and second user network interfaces 22, 24 and allows that the first end user equipment 25 is connected to two physically different Ethernets without the chance of loops occurring. Whenever one of the first or second ODN 15, 16, the first or second ONU 21, 23 or the first or second user network interface 22, 24 fails, the first end user equipment 25 still is able to receive service via the other physical path. In an alternative embodiment, both physical paths between router 13 and first end user equipment 25 are used simultaneously for data communication, by using load-share algorithms for the data traffic over both physical paths. This may also be implemented in the Ethernet protocol.

Using this spanning tree algorithm, the APON system and the EMS 14 are completely unaware of the protection in the access network 1. The protection is provided on a true end-to-end basis in a higher OSI-model layer, such as the Ethernet layer, instead of the physical layer of the APON system. Proposals to provide end-to-end protection in APON systems as listed in Appendix D of ITU-T Recommendation G.983.1 are all aimed at providing protection at the path level (from OLT to ONU), or even at the optical path level. The existing proposals all require additional hardware (duplicated fiber, duplicated optical splitters, additional optical splitters, duplicated OSU/OLT and/or duplicated ONU) and an additional switching mechanism (implemented in hardware circuitry or in software), which switches to the redundant path in case of a detected failure. This switching mechanism is usually implemented in a lower OSI-model layer, such as the physical layer software and is, e.g., included in the EMS 14. The present invention does not require this switching mechanism, and, therefore, the APON system can be offered at lower cost.

With all proposed variants in Appendix D of ITU-T Recommendation G.983.1, it is rather difficult to mix protected and unprotected customers on the APON system. Using the present invention, this is rather simple: A protected customer has duplicated ONU's 21, 23 and is connected to both the first and second ODN 15, 16. By using a protection switching mechanism in a higher OSI-layer (e.g. the Ethernet layer as described above), no impact occurs on the APON system, including the EMS 14, leading to a more cost-efficient solution. When a customer wants to switch from an unprotected connection to a protected connection, it suffices to install additional hardware at the customer (additional ONU 23 and, possibly, additional fiber routing from the optical splitter to the customer).

A further advantage of the present invention is, that when a failure occurs in the path between optical splitter and end user equipment 25, 29, this only affects that specific customer. The connection of the other customers with the same optical splitter and the OLT 10 will stay operative, as opposed to one of the alternatives presented in ITU-T Recommendation G.983.1, in which all customers will be switched to the alternative, redundant path.

Moreover, when the load sharing as described above is implemented, an automatic switchover in the case of failure is built-in.

The present invention has been illustrated with reference to the APON system described above, but the person skilled in the art will understand that the present method can also be applied to other point-to-multipoint access network systems providing Ethernet connectivity, and is not limited to the passive optical network system described. Other possible applications include, but are not limited to, cable modem networks, xDSL access networks, wireless access networks.

## Claims

1. Method for providing end-to-end protection in a point-to-multipoint access network (1), the access network (1) providing at least one physical connection between a line termination unit (10) and a plurality of network units (21, 23, 27), each network unit (21, 23, 27) being connectable to end user equipment (25, 29), the at least one physical connection comprising at least one distribution network (15, 16) connecting the line termination unit to the plurality of network units (21, 23, 27),
**characterised in that** protection switching between one of the at least one physical connection and a further one of the at least one physical connection is provided by a protection mechanism comprised in at least one of the plurality of network units (21, 23, 27).

2. Method according to claim 1, in which at least one of the plurality of network units (21, 23, 27) comprises a user network interface (22, 24, 28) for interfacing the network unit (21, 23, 27) with the end user equipment (25, 29).

3. Method according to claim 1 or 2, in which the access network (1) is a passive optical network.

4. Method according to claim 1, 2 or 3, in which the access network (1) is operated using an asynchronous transfer mode (ATM) protocol.

5. Method according to one of the proceeding claims, in which the access network (1) provides a connection according to an Ethernet protocol.

6. Method according to claim 5, in which the protection mechanism is provided in the Ethernet layer.

7. Method according to one of the proceeding claims, in which the protection mechanism is a spanning tree algorithm.

8. Method according to one of the proceeding claims, in which two separate physical paths are provided between the line termination unit (10) and the end user equipment (25, 29), and the protection mechanism further provides load-sharing over the two separate physical paths.

9. Point-to-multipoint access network (1) comprising
a line termination unit (10) having a first subscriber unit (11) and a second subscriber unit (12),
the first subscriber unit (11) being connected to a first distribution network (15) and the second subscriber unit (12) being connected to a second distribution network (16),
at least one customer facility (20, 26) comprising at least one network unit (21, 23, 27), the at least one network unit (21, 23, 27) being connected to either the first distribution network (15) or the second distribution network (16) and being arranged to interface either the first distribution network (15) or the second distribution network (16) with end user equipment (25, 29),
**characterised in that** the at least one network unit (21, 23, 27) comprises a protection mechanism for providing a protection switching function between a first end-to-end connection between the line termination unit (10) and the end user equipment (25, 29) via the first distribution network (15) and a second end-to-end connection between the line termination unit (10) and the end user equipment (25, 29) via the second distribution network (16).

10. Point-to-multipoint access network (1) according to claim 9, in which the at least one of the plurality of network units (21, 23, 27) comprises a user network interface (22, 24, 28) for interfacing the network unit (21, 23, 27) with the end user equipment (25, 29).

11. Point-to-multipoint access network (1) according to claim 9 or 10, in which the first and second distribution network (15, 16) comprises a passive optical network.

12. Point-to-multipoint access network (1) according to claim 9, 10 or 11, in which the access network (1) is operated using an asynchronous transfer mode (ATM) protocol.

13. Point-to-multipoint access network (1) according to one of the claims 9 through 12, in which the access network (1) provides a connection according to an Ethernet protocol.

14. Point-to-multipoint access network (1) according to one of the claims 9 through 13, in which the protection mechanism is provided in the Ethernet layer.

15. Point-to-multipoint access network (1) according to one of the claims 9 through 14, in which the protection mechanism is a spanning tree algorithm.

16. Point-to-multipoint access network (1) according to one of the claims 9 through 15, in which two separate physical paths are provided between the line termination unit (10) and the end user equipment (25, 29), and the protection mechanism further provides load-sharing over the two separate physical paths.
